Europäisches Patentamt

European Patent Office

Office européen des brevets

(11) Publication number: **0 094 355**
A2

# EUROPEAN PATENT APPLICATION

(21) Application number: 83830087.9

(22) Date of filing: 03.05.83

(51) Int. Cl.³: **A 01 K 5/00, A 01 K 39/01**

(30) Priority: 07.05.82 IT 8338382

(43) Date of publication of application: 16.11.83
Bulletin 83/46

(84) Designated Contracting States: **AT BE CH DE FR GB LI LU NL SE**

(71) Applicant: **CARNATION ITALIA S.p.A., Via S. Osvaldo 49, I-33100 Udine (IT)**

(72) Inventor: **Della Rossa, Ercole, Borgo Venchiaredo 11, Bilierio Alto di Magnano In Riviera (UD) (IT)**

(74) Representative: **D'Agostini, Giovanni, Dr., n. 17 via G.Giusti, I-33100 Udine (IT)**

(54) **Pet feeding-stick, rigidly fixable to pet cages, particularly for birds and other pet animals.**

(57) The pet feeding-stick comprises a molded plastic joining head (A), connected with a stick support (B) which supports glued feed (C) around it, wherein said joining head (A) has a plurality of grooves for rigidly inserting the feeding-stick between two wires of a cage, fixedly oriented to the respective cage wall, as for example in horizontal position, therefore making feeding easier for the pet animal.

EP 0 094 355 A2

ACTORUM AG

Pet feeding-stick, rigidly fixable to pet cages, particularly for birds and other pet animals.

The present invention relates to a stick supporting feed, as for example millet glued around it, so called "pet feeding-stick", in which a free end of said pet feeding-stick is provided with means in order to be fixed rigidly between the mashes of a pet-cage.

The invention is particularly suitable as pre-packed feeding means for birds and other pet animals, as for example hamsters, generally kept in cages.

At the present state of the art, pet feeding-sticks are well known, in which the relative support of the feeding mixture consists of a wire supplied at a free end with a hook to be hung for example on the meshes of a cage.

The drawbacks of the currently used solutions and of the above-mentioned prior art are as follows:
- the respective hook hanging system makes the pet feeding-sticks to swing, thus making feeding difficult for the animal;
- the pet feeding-stick may be unhooked by the swinging and fall on the bottom of the cage, where it would soon become unusable, due to the animal's excrements;

- the vertical position of the hung feeding-stick involves the necessity of clinging to it uneasily, making part of the feed to fall and crumble on the bottom of the cage, with the above-cited drawbacks;

- the utilization of a support wire does not ensure an effective fastening of the feeding mixture, reducing its duration; furthermore, the wire can be dangerous and if made of iron can also easily rust contaminating the feeding mixture fixed on it.

The invention as claimed is intended to provide a remedy to the above-mentioned disadvantages. It solves the problem providing a non-metallic support stick of the respective glued feed, supplied with a head to be fixed oriented rigidly on the wall meshes of the cage.

The advantages offered by this invention are mainly that:

- feeding-stick swinging is avoided;

- said feeding-stick can be fixed also normally to the vertical walls of the cage, so in the horizontal position the animal can be better supported and feed more easily;

- the lack of a support wire makes feeding less dangerous and attachment of the feeding mixture safer;

- the lack of an iron support wire does not involve the danger of feeding contamination.

One way of carrying out the invention is described in detail below with reference to drawings which illustrate some preferred embodiments, in which:-

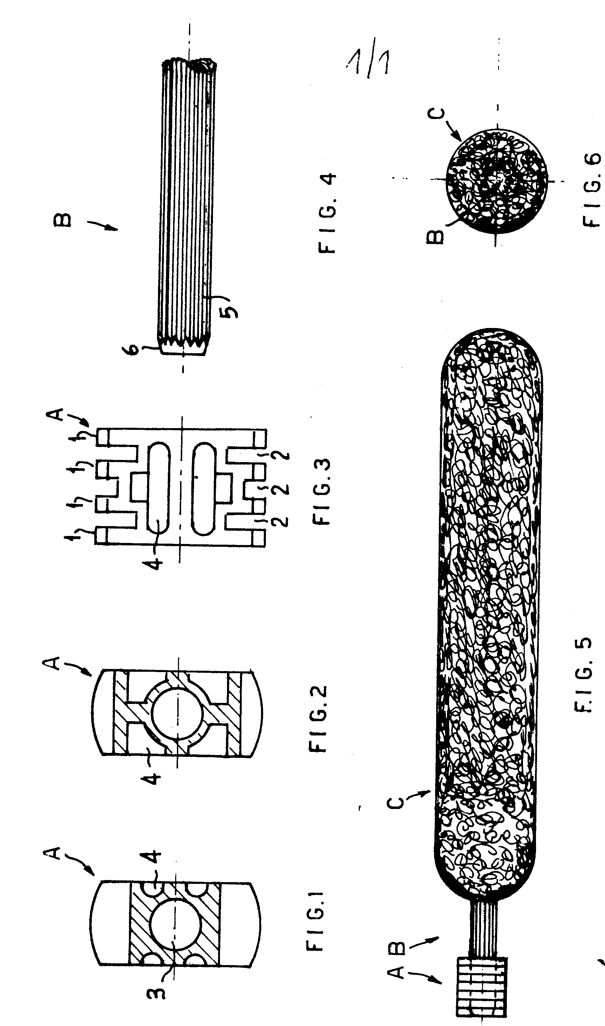

Figures 1 and 2 are two sectional transversal views of the fixing head connected to the stick respectively as regards two adjacent fixed joints for two adjacent cage wires; Figure 3 is a side view of the head of the preceding figures; Figure 4 is a partial horizontal longitudinal side view of the support stick; Figure 5 is a total side view of the stick assembled with the feeding mixture; Figure 6 is a sectional transversal view of the single stick with the relevant feeding mixture all around it.

According to the above figures the feeding-stick is formed by a stick, made of wood "B", supplied with longitudinal grooves 5 and beveled at the ends 6, which inserts by pressure into a respective hole 3 of a molded plastic head "A", being this last one with an approximately rectangular transversal shape whose opposed lateral surfaces comprise a plurality of transversal adjacent and parallel opposite teeth 1, devided by corresponding grooves 2 of different depths and of such a width to allow the 90° rotation joint of the head between two adjacent wires of a cage. The different depth is intended to fit to different spacings of the wires in the cages and the same for the width of the grooves intended to insert according to the wire diameters.

After the head "A" is inserted in the wood stick "B", the pressing of the feeding mixture "C", to realize a requested glued bird-seed, is carried out around said stick as shown in Figures 5 and 6, .

Of course, the shape can also be different from the cylindrical, end rounded shape shown.

Udine, April 21, 1983.

p. CARNATION ITALIA S.p.A.

The Representative

Dr. Giovanni D'Agostini

Claims:

1. Pet feeding-stick, constituted by a support with glued feed (C) around it, to be hooked to the cage, particularly for birds and other pet animals, characterised in that it comprises, at its free end (B), a joining head (A) provided with rigid connecting means to be joined between two adjacent wires of a cage, by inserting between them and thus allowing to support, said complete feeding-stick, fixedly oriented as regards the respective cage wall.

2. A feeding-stick as claimed in claim 1., characterised in that its support is constituted by two elements rigidly assembled between them, respectively: said joining head (A) provided with an inserting hole (3) for a stick, and relative stick support (B) intended to support said feed (C).

3. A feeding-stick as claimed in claims 1., 2., characterised in that said joining head (A) has an approximately rectangular transversal shape in which the opposed lateral surfaces are provided with parallel and opposite grooves (2).

4. A feeding-stick as claimed in the preceding claim, characterised in that said joining head (A) has said grooves (2) of different sizes one from the other.

5. A feeding-stick as claimed in claims 1., 2., 3., 4.,characterised in that said joining head and relative stick are made in plastic material.

6. A feeding-stick as claimed in claims 2 to 5, characterised in that said stick support is made of wood.

7. A feeding-stick as claimed in the preceding claims, characterised in that said stick support is provided with a plurality of teeth or grooves (5) on its surface.

8. A feeding-stick as claimed in the preceding claim, characterised in that the respective surface of said stick support is grooved (5).

Udine, April 21, 1983.

p. CARNATION ITALIA S.p.A.

The Representative

Dr. Giovanni D'Agostini,

FIG.1

FIG.2

FIG.3

FIG. 4

FIG. 5

FIG.6

p.CARNATION ITALIA S.P.A.
The Representative:
Dr. Giovanni D'Agostini

0094355